(19) Europäisches Patentamt
European Patent Office
Office européen des brevets

(11) **EP 4 316 885 A1**

(12) **EUROPEAN PATENT APPLICATION**

(43) Date of publication:
**07.02.2024 Bulletin 2024/06**

(21) Application number: **22306158.1**

(22) Date of filing: **01.08.2022**

(51) International Patent Classification (IPC):
$B60K\ 6/20^{(2007.10)}$    $B60W\ 10/06^{(2006.01)}$
$B60W\ 10/08^{(2006.01)}$    $B60W\ 10/26^{(2006.01)}$
$B60W\ 20/11^{(2016.01)}$    $B60W\ 20/12^{(2016.01)}$
$B60W\ 20/14^{(2016.01)}$

(52) Cooperative Patent Classification (CPC):
**B60W 10/08; B60K 6/20; B60W 10/06;
B60W 10/26; B60W 20/11; B60W 20/12;
B60W 20/14;** B60W 2556/50; B60W 2710/244

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **TOYOTA JIDOSHA KABUSHIKI KAISHA**
**Toyota-shi, Aichi-ken, 471-8571 (JP)**

(72) Inventors:
• **KESTEMONT, Marin**
**1140 BRUSSELS (BE)**

• **SYMEONIDIS, Nikos**
**1140 BRUSSELS (BE)**
• **NAGANO, Shota**
**1140 BRUSSELS (BE)**
• **MARTIN, Thierry**
**1140 BRUSSELS (BE)**
• **LOSERO, Rémi**
**1140 BRUSSELS (BE)**

(74) Representative: **Cabinet Beau de Loménie**
**158, rue de l'Université**
**75340 Paris Cedex 07 (FR)**

Remarks:
Amended claims in accordance with Rule 137(2) EPC.

(54) **POWER SPLIT DETERMINATION FOR GENERATING CONTROL INSTRUCTIONS FOR A VEHICLE**

(57)    A method of generating control instructions for a hybrid vehicle comprising a drive train, a battery, an electric motor powered by the battery and a fuel engine, wherein the electric motor and the fuel engine are configured to supply mechanical power to the drive train, the method comprising:
- obtaining a planned route of the vehicle;
- computing a state of charge of the battery along the planned route, wherein the state of charge is determined by distributing use of the electric motor over the planned route while allowing priority use of the fuel engine over depletion of the battery to decrease fuel consumption of the fuel engine over the planned route;
- outputting control instructions for the vehicle to follow the computed state of charge along the planned route.

**FIG. 5B**

Processed by Luminess, 75001 PARIS (FR)

**Description**

TECHNICAL FIELD

The present disclosure relates to the field of automotive control, especially the control of hybrid vehicles which comprise at least two power sources of different nature. In particular, the present disclosure relates to a method of generating control instructions for a hybrid vehicle.

TECHNOLOGICAL BACKGROUND

Environmental concerns are a burning issue in modern societies. In response to this challenge, the automotive industry endeavors to reduce fuel consumption and greenhouse gas (GHG) emissions of vehicles, in particular through the development of hybrid vehicles.

Nowadays, hybrid vehicles are controlled in a greedy manner: in the example of a hybrid vehicle with an electric motor and an internal combustion engine, first, the electric motor is used and a battery thereof depleted as much as possible, and then the internal combustion engine takes over for the remainder of the route. Although this approach is very simple to implement, there is room for improvement in order to further decrease fuel consumption and greenhouse gas emissions.

SUMMARY

In this respect, the present disclosure relates to a method of generating control instructions for a hybrid vehicle comprising a drive train, a battery, an electric motor powered by the battery and a fuel engine, wherein the electric motor is configured to supply mechanical power to the drive train, and the fuel engine is configured to supply mechanical power to the drive train or to supply electrical power to the battery, the method comprising:

- obtaining a planned route of the vehicle;
- computing a state of charge of the battery along the planned route, wherein the state of charge is determined by distributing use of the electric motor over the planned route while allowing priority use of the fuel engine over depletion of the battery to decrease fuel consumption of the fuel engine over the planned route ;
- outputting control instructions for the vehicle to follow the computed state of charge along the planned route.

For conciseness, this method is referred to hereinafter as the generating method. The generating method may be computer-implemented.

In the present disclosure, a hybrid vehicle stands for a vehicle having at least two power sources of different nature, e.g. an electric motor and a fuel engine, namely an engine which consumes fuel (such as gasoline, dihydrogen, etc.) to output another type of energy (electrical or mechanical energy). Examples of fuel engines include an internal combustion engine, which may mechanically drive the drive train, or a fuel cell, which may provide electrical power to the battery. Therefore, in the present disclose, the phrase hybrid vehicle encompasses variants such as hybrid electric vehicles (HEV), plug-in hybrid electric vehicles (PHEV) or fuel cell electric vehicles (FCEV). In the following, the electric motor may be referred to more simply as the motor and the fuel engine may be referred to more simply as the engine.

The state of charge (SOC) of the battery, as known in the art, quantifies the amount or fraction of power left in the battery. The SOC decreases when battery power is used by the electric motor to provide the drive train with mechanical power. The drive train delivers mechanical power to the wheels of the vehicle. Conversely, the SOC may increase when the battery is charged, e.g. from an external power source, with power from the engine or through regenerative braking. In this respect, the hybrid vehicle may comprise a generator configured to charge the battery. The generator may be associated to the electric motor and, as opposed to the engine, does not use any fuel as an input.

In the generating method, a planned route of the vehicle is obtained. The planned route may be provided by a user or by a route calculation system, which may be either onboard or remote. Each location of the planned route may be associated with parameters such as time, predicted speed of the vehicle and slope of the road.

The prior art greedy approach could have proved satisfactory when the vehicle control system had no knowledge of the whole route followed by the vehicle. On the other hand, the present generating method leverages the knowledge of the planned route as a whole to optimize distribution of the use of the motor globally. The inventors found that, surprisingly, it was sometimes more efficient not to use the electric motor first, i.e. to allow priority use of the fuel engine, although the SOC was still high enough for the electric motor to drive the drive train. Thus, the present generating method leverages the fact that the motor and the engine have different characteristics and may be optimized for different operating points of the vehicle, to allocate portions of the route to the motor or the engine, depending on which option is best in terms of efficiency. In this way, the overall required energy for the vehicle, hence the fuel consumption of the fuel engine over the planned route can be decreased compared to a situation with a similar vehicle in the same initial state conditions and a same planned route.

Based on whether the motor or the engine is used for each portion of the route, the state of charge is computed. Specifically, from the parameters of the planned route (e.g. time, speed and slope) and optionally parameters of the vehicle (e.g. mass, road load, which may be either default values or dynamically measured or estimated values), a propeller shaft torque may be predicted. The power split between the motor and the engine and the resulting state of charge may be computed based on the predicted propeller shaft torque. The state of charge may be computed with the constraint of depleting the battery as much as possible.

Then, control instructions for the vehicle are derived. The control instructions may comprise instructions for the vehicle to switch on/off the motor and/or the engine, or to operate either of them at a particular operating point, so that the vehicle can follow the computed state of charge along the planned route.

The vehicle may be driven manually by a driver, or may be an autonomous vehicle, or may be a vehicle with any level of driving assistance. Experience has shown that manual driving does not prevent vehicle control systems from macroscopically following a desired state of charge.

Optionally, the state of charge is determined such as to reach a minimum value at a point of the planned route further than a point where the state of charge would reach the minimum value if the electric motor were used continuously from the beginning of the planned route. Thus, the minimum value is defined as the final state of charge value in case the electric motor was used as much as possible. In these embodiments, since the generating method reaches the minimum value, the battery is depleted at least as much as in the greedy approach. This ensures that the fuel consumption of the engine is not increased, and that the motor is used as much as possible. In addition, since the minimum value is reached at a point of the planned route further than a point where the state of charge would reach the minimum value if the electric motor were used continuously from the beginning of the planned route, there is at least one point where use of the motor is suspended, in order to use it at a later point of the route where it is more efficient (or, conversely, less efficient to use the engine).

Optionally, the computed state of charge has at least one non-decreasing portion before reaching a minimum value. This non-decreasing portion may be a constant portion when the engine is used instead of the motor, or an increasing portion when the battery is charged.

Optionally, the state of charge is determined such that the state of charge has reached a target value at the end of the planned route, within a tolerance. The target value may be the above-mentioned minimum value; that is, it is an object of the generating method that the vehicle be propelled as much as possible by the motor. The tolerance may be a parameter of the generating method.

Optionally, use of the electric motor is distributed over the planned route while taking constraints such as geofences, in particular electric-driving geofences, into account. Constraints are rules which constrain the behavior of the vehicle, in particular the use of the engine or the motor, hence the computed state of charge. A geofence is a virtual perimeter for a geographic area, associated with one or more constraints. For instance, an electric-driving geofence defines a perimeter in which only electric-driving is allowed. Likewise, zero-emission zones or so-called green zones are constraints which may be defined by geofences.

In these embodiments, the state of charge is computed by anticipating the constraints which will apply to the vehicle along the planned route. As a consequence, the use of the electric motor is determined in accordance with these constraints. For instance, the battery is saved for a green zone at the end of the planned route, and the possibly remaining use of the electric motor is distributed on the remainder of the planned route. Such constraints could not be respected with a greedy control of the vehicle.

Optionally, the state of charge is computed by an optimization technique. Optimization techniques include dynamic programming (DP), indirect methods or direct methods involving transformation into Non Linear Programming (NLP) (e.g. single shooting linear or multiple shooting non-linear Model predictive Control, collocation polynomial approximation methods). Indirect optimization methods include Pontryagin Maximization Principle (PMP), equivalent consumption minimization strategy (ECMS), adaptive ECMS (A-ECMS), etc.

In particular, Pontryagin Maximization Principle (PMP) is an indirect method of control theory used to solve a two-point boundary value problem (TPBVP) of finding the best possible control for taking a dynamical system from one state to another. In the generating method, the state to optimize may be the SOC, which is a consequence of the operation of the engine. Optimization based on Pontryagin Maximization Principle (PMP) may include knowing the initial state (or first boundary), initializing (guessing) a co-state, and for each time step $k$, determining at least one Hamiltonian at time step $k$, finding a corresponding optimal control at time step k, propagating the state and co-state to a successive time step $k + 1$, checking a convergence condition at final time step, and optionally repeating these steps with an updated co-state initialization if the convergence condition is not met. The co-state initialization may be updated using a numerical optimization iterative method (e.g. Newton method) based on adjoint residual final value equation.

The advantages of Pontryagin Maximization Principle (PMP) include its accuracy compared to direct methods. Compared to other optimal control algorithms, PMP is cycle optimal thanks to Hamiltonian formulation and dynamic co-state cycle propagation. It is also real-time friendly for simplified problems and the update of the control instructions for the vehicle is fast once the initial co-state is known. Additionally, PMP can handle multi-input-multi-output (MIMO) systems and systems with multiple states. In contrast, ECMS uses a much simpler formulation with a physical meaning for the constant co-state at all times but supports only one state in the problem formulation. It also requires a full cycle knowledge to find the constant co-state (cycle preview is mandatory, hence slower solution). Adaptive ECMS (A-ECMS) does not need cycle preview however optimality on full cycle is not guaranteed. Therefore, PMP is best suited for real-time applications such as generating control instructions for a hybrid vehicle.

Optionally, in implementing Pontryagin Maximization Principle, the operation of the fuel engine is modelled by an OFF point and a plurality of ON points. The plurality of ON points may be finite and comprise discrete ON points. The plurality of ON points may correspond to different operating points of the engine, e.g. in terms of speed and/or torque, e.g. where the engine has an optimal fuel usage. These points, in turn, correspond to different instantaneous fuel consumptions. These points may be chosen following the engine brake-specific fuel consumption (BSFC) line. In taking a plurality of ON points around the range of possible engine operation points (or states) into consideration, the behavior of the engine can be better modelled, and the fuel consumption resulting from the control instructions is further decreased. Besides, the plurality of ON points being finite and discrete reduces the computational time for finding the optimal control operating point at each time step. The operation of the engine may be modelled by an OFF point and a plurality of ON points for other optimization techniques as well.

Optionally, in implementing Pontryagin Maximization Principle, at least one of the iteratively calculated state of charge and a co-state is saturated. This ensures that the calculated SOC remains within physically-meaningful ranges.

Optionally, in implementing Pontryagin Maximization Principle, a gain used to update an initial co-state of the fuel engine operation point depends on a difference between a target value of the state (the state of charge) and a predicted value of the state (the state of charge) at the end of the planned route. That is, the gain is adaptive. For instance, the greater the difference, the greater the gain. This enables to considerably speed-up updates of the initial co-state and, thus, convergence of the optimization, while conventional PMP may suffer from numerical convergence stability issues dependent on the good or bad guess for the initial co-state. Thus, the generating method is made suitable for real-time applications such as power split optimization to generate control instructions for a hybrid vehicle.

More generally, the co-state of PMP may not be constant from one time step to another, that is, the Hamiltonian may depend on the state SOC.

Optionally, in implementing Pontryagin Maximization Principle, convergence is achieved if the state of charge has reached a target value at the end of the planned route, within a tolerance.

Optionally, the state of charge is successively computed for successive sub-portions of the planned route. The size of the sub-potions may depend on the amount of instructions the hardware real-time system can handle for one software task time step run. For instance, when the optimization is started, the SOC is computed for the first N seconds of the planned route; after which the SOC is computed for the following N seconds of the planned route, and so on, e.g. until the SOC has been computed for the whole planned route. For each sub-portion of the planned route, the computation results may be stored in a memory so that they can be used by the computations relating to the subsequent sub-portions.

The present disclosure is further related to a device for generating control instructions for a hybrid vehicle comprising a drive train, a battery, an electric motor powered by the battery and a fuel engine, wherein the electric motor and the fuel engine are configured to supply mechanical power to the drive train, the device being configured to:

- obtain a planned route of the vehicle;
- compute a state of charge of the battery along the planned route, wherein the state of charge is determined by distributing use of the electric motor over the planned route while allowing priority use of the fuel engine depletion of the battery to decrease fuel consumption of the fuel engine over the planned route;
- output control instructions for the vehicle to follow the computed state of charge along the planned route.

The device, also referred to hereinafter as the generating device, may be configured to carry out the above-mentioned generating method, and may have part or all of the above-described features. The generating device may have the hardware structure of a computer.

The present disclosure is further directed to a vehicle comprising the generating device, embedded in the vehicle. Therefore, generation of the control instructions is carried out onboard: each vehicle has dedicated hardware to perform this generation in real time.

The present disclosure is further related to a computer program including instructions for executing the steps of the above described generating method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described generating method.

The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

Besides, the present disclosure relates to a device for preparing control of a vehicle, comprising:

- a processing module configured to obtain a planned route of the vehicle, to acquire environmental data from at least one external system and dynamically generate at least one geofence based on the environmental data, and to determine a geofence indicator indicating at least one position at which the planned route lies inside the at least one geofence; and
- a communication module configured to send the geofence indicator to a control system configured to operate the vehicle.

For conciseness, this device is referred to hereinafter as the preparing device. The preparing device may have the hardware structure of a computer.

The preparing device is configured to communicate with a control system of the vehicle, though the communication module. Thus, the preparing device may be external to the vehicle, e.g. a remote device. In other embodiments, on the contrary, the preparing device may be onboard the vehicle.

In the preparing device, a planned route of the vehicle is obtained. The planned route may be provided by a user or by a route calculation system, which may be either onboard or remote.

The processing module is configured to acquire environmental data from at least one external system. The external system is external to the preparing device, and optionally external to the vehicle too. The external system may be a remote server, e.g. a cloud server. Environmental data encompass any data relating to the environment in which the vehicle is to move, e.g. data relating to air quality, traffic regulations, location of certain types of buildings, etc.

In the present preparing device, the geofence is not present directly in the environmental data but dynamically generated based on the environmental data. That is, the generated geofence is always up-to-date. Besides, the generated geofence may vary from one vehicle to another based on the vehicle characteristics. In other words, the geofences are not set in advance. In addition, the generated geofence may take into account at least one aspect intrinsic to the planned route, such as the estimated driving time at given positions of the planned route.

Based on the geofence, a geofence indicator is determined. For instance, the geofence indicator may be a flag standing for whether a given position of the planned route lies inside or outside a geofence. The geofence indicator may have a plurality of status values corresponding e.g. to a plurality of geofence types. While the geofences may have intricate boundaries the representation of which is data-consuming, the geofence indicator summarizes, e.g. in one dimension (planned route) or two dimensions (planned route vs. status values), the intersection of the planned route with the geofences. As a consequence, sending the geofence indicator to a control system configured to operate the vehicle is fast and inexpensive in terms of data transfer. This favors real time applications such as driving control and assistance.

Besides, the geofence indicator being position-based, instead of time-based, increases reliability of the geofence indicator, especially with regard to traffic jam.

Therefore, the preparing device ensures that the control system has complete and up-to-date data to optimally drive the vehicle along the planned route.

Although the processing module is configured to dynamically generate at least one geofence, in some cases, the environmental data may be such that no geofence is to be generated. Besides, in some cases, at least one geofence is generated but the planned route does not lie inside the geofence, such that the geofence indicator does not reflect the presence of that geofence.

Optionally, the processing module is configured to acquire the environmental data based on the planned route. For instance, data which have no interaction with the planned route are not acquired, such as data which are valid at a time different from the time at which the vehicle is estimated to drive along the planned route. Therefore, the amount of environmental data acquired can be limited and the preparing device can work more efficiently.

Optionally, the environmental data relate to locations within a predetermined distance from the planned route. Therefore, the amount of environmental data acquired can be limited and the preparing device can work more efficiently.

Optionally, the at least one external system comprises a plurality of application programming interfaces (APIs) independent from one another. That is, the processing module is configured to acquire the environmental data from a plurality of independent APIs, each of which may be maintained by a different service provider. The APIs provide interfaces to the service providers' data. Thus, the processing module can aggregate data from different sources in order to generate the geofences from all the relevant information. The processing module may communicate with the APIs through the communication module or through other communication means.

Optionally, the planned route is associated with an estimated timing, and the environmental data are acquired based on the estimated timing and/or the at least one geofence is generated based on the estimated timing. The estimated timing may include a departure time at which the vehicle is to start driving along the planned route, and/or an arrival time at which the vehicle is expected to complete the planned route, and/or one or more times at which the vehicle is expected to pass by given positions along the planned route. Since some of the environmental data may be time-dependent (e.g. air pollution, presence of children in or around schools, etc.), taking the estimated timing of the planned route into account helps limiting the amount of environmental data acquired and/or the number of geofence generated, thus ensuring an optimal working of the preparing device.

Optionally, each of the at least one geofence comprises topographical boundaries and a constraint for the vehicle to respect within said boundaries. Topographical boundaries represent a geographical peri meter.

Optionally, the geofence indicator comprises a map between said at least one position and at least one status value for each position. The status value may minimally indicate whether the position lies inside a geofence or not.

Optionally, the environmental data comprise at least one place such as a hospital or a school, and the corresponding geofence is generated as surrounding said place by a preset distance. The place may be a landmark or more generally a place that is sensitive to the vehicle passing nearby. In these embodiments, it is possible to decrease air pollution around sensitive places such as hospitals or schools. Other sensitive places are envisaged as well.

Optionally, the environmental data comprise at least one constrained zone such as a low emission zone or a zone in which air quality is worse than a threshold, and the corresponding geofence is generated as the boundaries of the at least one constrained zone. Therefore, measures can be taken not to further decrease the air quality in the constrained zone, thanks to identifying this zone with a geofence.

Optionally, the control system is embedded in the vehicle, and the preparing device is remote from the vehicle. Therefore, maintenance of the preparing device, such as updates of the connection to the external system or APIs from which the environmental data are acquired, can be carried out without interaction with the vehicle.

Optionally, the vehicle is a hybrid vehicle or a plug-in hybrid vehicle.

The present disclosure further relates to a method for preparing control of a vehicle, comprising:

- obtaining a planned route of the vehicle;
- acquiring environmental data from at least one external system;
- dynamically generating at least one geofence based on the environmental data;
- determining a geofence indicator indicating at least one position at which the planned route lies inside the at least one geofence; and
- sending the geofence indicator to a control system configured to operate the vehicle.

For conciseness, this method is referred to hereinafter as the preparing method. The preparing method may be computer-implemented. The preparing method may be carried out by the above-described preparing device, and may have method steps corresponding to any of the above-described features.

The present disclosure further relates to a computer program including instructions for executing the steps of the above described preparing method when said program is executed by a computer. This program can use any programming language and take the form of source code, object code or a code intermediate between source code and object code, such as a partially compiled form, or any other desirable form.

The present disclosure further relates to a recording medium readable by a computer and having recorded thereon a computer program including instructions for executing the steps of the above described preparing method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

The invention and advantages thereof will be better understood upon reading the detailed description which follows, of embodiments given as non-limiting examples. This description refers to the appended drawings, wherein:

- Fig. 1 is a flow chart showing steps of a method according to an embodiment;
- Fig. 2 diagrammatically illustrates a device for preparing control of a vehicle according to an embodiment;
- Fig. 3 diagrammatically illustrates a planned route and environmental information;
- Fig. 4 is a chart illustrating fuel consumption as a function of time;
- Fig. 5A illustrates an SOC along the planned route according to the prior art greedy approach;

- Fig. 5B illustrates an SOC along the planned route according to an embodiment.

DETAILED DESCRIPTION OF EMBODIMENTS

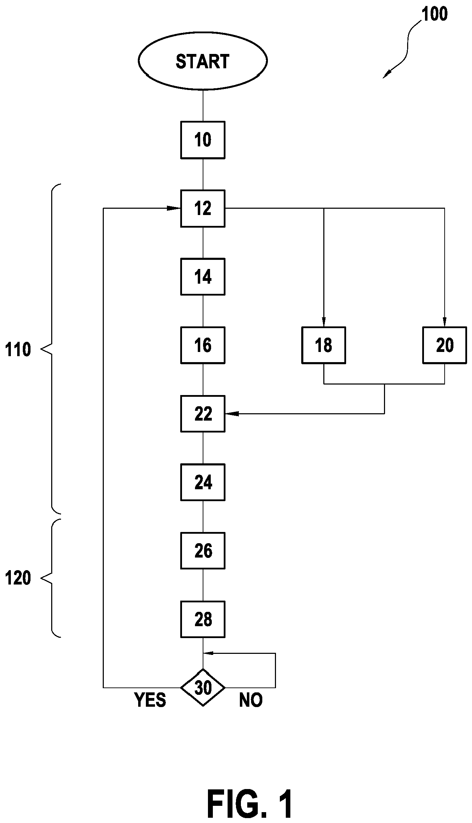

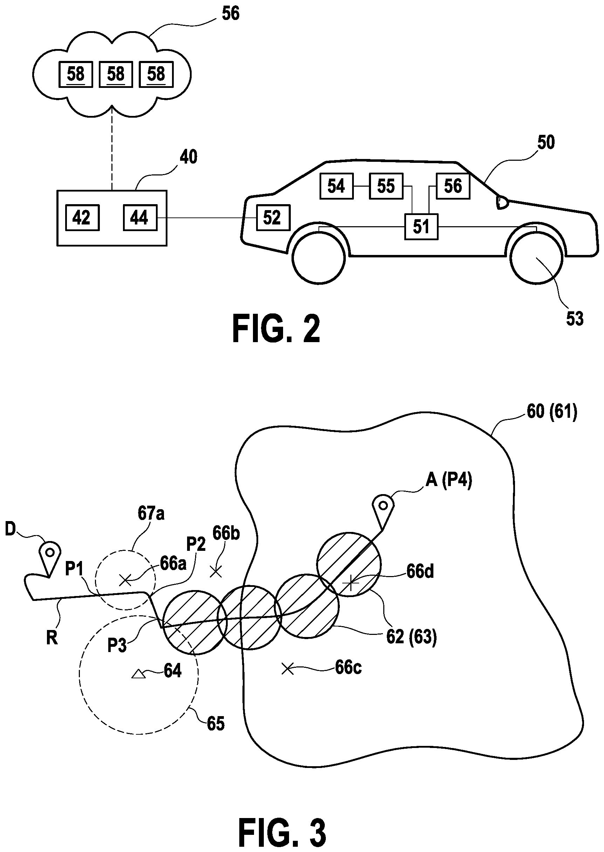

Figure 1 shows steps of a method, generally referred to as the guiding method 100, for guiding a vehicle 50 along a planned route. The vehicle 50 may be a hybrid vehicle, including a variant thereof such as a plug-in hybrid vehicle. As illustrated in Fig. 2, as a hybrid vehicle, the vehicle 50 may comprise a drive train 51, a control system 52, wheels 53 driven by the drive train 51, a battery 54, a motor 55 which may be an electric motor, and an engine 56 which may be an internal combustion engine. The drive train 51 can be driven by (i.e. supplied with mechanical power from) the motor 55 and/or the engine 56, based on instructions from the control system 52. The battery supplies electrical power to the motor 54. In an alternative, the engine 56 could be a fuel cell stack system configured to supply the battery 54 with electrical power.

Back to Fig. 1, the guiding method 100 comprises an input step 10 acquiring a departure position D of the vehicle and an arrival position A of the vehicle. A user of the vehicle 50, or a system configured to guide the vehicle 50, may input the departure position D and the arrival position A, such that the vehicle 50 is expected to travel from the departure position D to the arrival position A.

The guiding method 100 further comprises an obtaining step 12 of obtaining a planned route R. The planned route R may be based on the departure position D and the arrival position A and may thus define a path for the vehicle to travel from the departure position D and the arrival position A. In other embodiments, the planned route R may be predefined without input of a departure position D and/or an arrival position A. The planned route R is illustrated in Fig. 3. The planned route R may be generated in a manner known per se in the art.

The obtaining step 12 may be carried out by a processing module 42 of a preparing device 40 illustrated in Fig. 2. Figure 2 shows that the preparing device 40, i.e. a device for preparing control of a vehicle, comprises a processing module 42 and a communication module 44 according to embodiments of the present disclosure. The preparing device 40 may have various further modules and/or functions, e.g. may be a platform configured to perform driving assistance or driving supervision. The preparing device 40 may be remote from the vehicle 50, as illustrated in Fig. 2.

The preparing device 40 may comprise an electronic circuit, a processor (shared, dedicated, or group), a combinational logic circuit, a memory that executes one or more software programs, and/or other suitable components that provide the described functionality. In other words, the preparing device 40 may be a computer device. The preparing device 40 may be connected to a memory, which may store data, e.g. a computer program which when executed, carries out the preparing method according to the present disclosure.

The processing module 42 may be implemented as software running on the preparing device 40 or as a hardware element of the preparing device 40. Likewise, the communication module 44 may be implemented as software running on the preparing device 40 or as a hardware element of the preparing device 40.

The planned route R may be generated by the processing module 42 itself or generated elsewhere and acquired by the processing module 42.

On the one hand, after the obtaining step 12, the guiding method 100 proceeds to a route meta-data acquiring step 14. In the route meta-data acquiring step 14, optionally, meta-data such as traffic jam, elevation (altitude) of the route, traffic speed and the like are acquired in order to better estimate the behavior of the vehicle 50 on the planned route R. The meta-data may be acquired from at least one external system such as cloud APIs.

Using the meta-data when available, a speed profile prediction step 16 predicts the speed profile of the vehicle along the planned route R. The speed profile may be predicted in a manner known per se in the art, using e.g. driver models. The speed profile may be determined based on the vehicle characteristics, speed regulations, and, if available, traffic jam information, etc.

The planned route R may be associated with an estimated timing. The estimated timing defines when the vehicle 50 is expected to be at one or more positions of the planned route, the positions possibly including the departure position D and/or the arrival position A. Determining an estimated timing is known per se in the art. The estimated timing may be based on the speed profile determined at the speed profile prediction step 16, or more generally on other timing information, e.g. a departure time indicated by a user or system as soon as the input step 10.

On the other hand, after the obtaining step 12, the guiding method 100 proceeds to one or more environmental data acquisition steps 18, 20. In each of the environmental data acquisition steps, environmental data are acquired from at least one external system and at least one geofence is dynamically generated based on the environmental data.

As shown in Fig. 2, the external system 56 may be a cloud platform. Besides, the external system 56 may comprise a plurality of APIs 58 independent from one another. Each API 58 may relate to a different kind of data, e.g. air quality data, low emission zone (LEZ) data, topographical data, etc. Communication between the preparing device 40 and the external system 56 may be of any kind, e.g. using Internet. The preparing device 40 may communicate with the external system 56 via the communication module 44 or other means. In particular, acquisition of the environmental data does not rely on sensors on the vehicle 50 and/or interaction between the vehicle 50 and its local environment, which avoids developing dedicated road infrastructures.

In a first environmental data acquisition step 18, the environmental data to acquire comprise at least one constrained zone such as a LEZ 60 or a zone 62 in which air quality is worse than a threshold. Examples of such zones are illustrated in Fig. 3. A low emission zone is a zone in which regulations require reduced emissions, achieved e.g. by reduced speed or electric driving.

Geofences corresponding to the constrained zones are generated as the boundaries of the constrained zones. Specifically, in this example, a geofence comprises topographical boundaries and a constraint for the vehicle to respect within said boundaries. In this example, the boundaries of geofences 61, 63 correspond to the boundaries of the LEZ 60 and the zone 62. However, in other examples, the geofences may be generated with augmented or reduced boundaries, as desired. Besides, as shown in Fig. 3, the constrained zones and/or the corresponding geofences may overlap.

It is self-evident that air quality, for instance, varies with time, such that the constrained zones may be time-dependent. Thus, dynamically generating the geofences enables to take these variations into account.

In a second environmental data acquisition step 20, the environmental data to acquire comprise at least one place such as a hospital 64 or a school 66a, 66b, 66c, 66d. The corresponding geofences are generated as surrounding said respective places by a preset distance. Specifically, a geofence 65 is generated as a disc centered on the hospital 64. Likewise, a geofence 67a is generated as a disc centered on the school 66a. Note that the geofences around different types of place, here a school and a hospital, may differ by their preset distance (e.g. radius). In addition, the geofences may not be discs, or may not be centered.

Likewise, geofences could be generated to correspond to the other schools 66b, 66c and 66d. However, in this embodiment, it is detected that school 66b is too far away from the planned route R, such that the geofence around the school 66b would not intersect the planned route R. Therefore, for computational efficiency, this geofence is not generated explicitly.

The same applies to the geofence around school 66c.

As regards school 66d, it is noteworthy that school 66d lies in at least one constrained zone, here both the LEZ 60 and the zone 62 in which air quality is worse than a threshold. In addition, the portions of the planned route R closest to school 66d also lie inside these constrained zones. Accordingly, it may not be useful to generate the corresponding geofence, as the vehicle traveling along the planned route R is already constrained by other geofences. However, in other embodiments, since different geofences may be associated to different types of constrains, it may be useful to generate the geofence corresponding to school 66d.

As can be understood from these examples, at least one geofence is generated based on the environmental data, but some environmental data may be ignored when dynamically generating the geofences, e.g. because they are too far away from the planned route.

In order to save even more computation and data load, the environmental data may be acquired based on the planned route R. Optionally, the environmental data is selected as the data having a relation to locations within a predetermined distance from the planned route. For example, when acquiring the environmental data, the processing module 42 may detect immediately that schools 66b, 66c are too far away from the planned route, and may not include them in the environmental data.

In another example, e.g. when the planned route R is associated with an estimated timing as explained before, the environmental data may be acquired based on the estimated timing. That is, for instance, schools may be ignored during school holidays or bank holidays, or outside school hours (e.g. at night).

In yet another example, e.g. when the planned route R is associated with an estimated timing as explained before, the at least one geofence may be generated based on the estimated timing. That is, for instance, if the estimated timing for the vehicle to cross geofence 67a around school 66a falls is a time before opening of school 66a, geofence 67a may not be generated at all, or may be generated with a smaller radius, or may otherwise be changed.

These examples can be used as alternatives to one another, or in combination. These examples show that in dynamically generating the geofences, the geofences are not set in advance but can depend on the planned route and/or on the vehicle. Therefore, the geofence information generated for each vehicle is customized to meet the useful constraints without the vehicle being hindered by unnecessary constraints.

The geofences, especially electric-driving geofences, LEZ or the like, enable to displace GHG emissions to locations where they are less hazardous to residents' health.

Based on the planned route R and optionally meta-data and/or timing thereof on the one hand, and on the geofences on the other hand, a geofence indicator is determined in step 22. The geofence indicator indicates at least one position (i.e. a point of the planned route R) at which the planned route R lies inside at least one of the geofences 61, 63, 65, 67a. In the example of Fig. 3, the planned route R lies inside a geofence between points P1 and P2, and between points P3 and P4 (P4 is, in this case, the arrival position A). The geofence indicator may convey this information in any suitable manner. For instance, the geofence indicator may comprise only the positions at which the indicator value changes (in this case: P1, P2 and P3). In other embodiments, the geofence indicator may comprise more positions along the planned route R.

The geofence indicator may have two status values, e.g. 0=OUTSIDE GEOFENCE and 1=INSIDE GEOFENCE, in which case it is sufficient to store the points of the planned route R where the geofence indicator has one of these status values. If the geofence indicator takes more than two status values, e.g. to distinguish between different types of geofences, the status values may be stored too (e.g. 0=OUTSIDE ANY GEOFENCE, 1=INSIDE SCHOOL GEOFENCE, 2=INSIDE HOSPITAL GEOFENCE, 3=INSIDE LEZ GEOFENCE, etc.). More generally, the geofence indicator may comprise a map between at least one position of the planned route and at least one status value for each said position. For instance, the geofence indicator may be a position-dependent flag.

At sending step 24, the geofence indicator is sent to a control system 52 configured to operate the vehicle 50. This sending may be carried out by the communication module 44. As shown in Fig. 2, in this embodiment, the control system 52 is embedded in the vehicle 50, whereas the preparing device 40 is remote from the vehicle 50. Any suitable communication means may be used, such as wireless communication using cellular networks or the like.

In view of the foregoing, the preparing device 40 is configured to carry out a method 110 for preparing control of a vehicle, comprising obtaining step 12 for obtaining a planned route R of the vehicle 50, environmental data acquisition steps 18, 20 for acquiring environmental data from at least one external system and dynamically generating at least one geofence 61, 63, 65, 67a based on the environmental data, step 22 for determining a geofence indicator indicating at least one position at which the planned route lies inside the at least one geofence, and sending step 24 for sending the geofence indicator to a control system 52 configured to operate the vehicle 50. While the sending step 24 may be carried out by the communication module 44, the other steps may be carried out by the processing module 42.

The guiding method 100 may proceed further to a computing step 26 in which, based on the obtained planned route R of the vehicle 50, the SOC of the battery 54 is computed along the planned route R. In this computation, the state of charge is determined by distributing use of the motor 55 over the planned route R while allowing priority use of the engine 56 over depletion of the battery 54 to decrease fuel consumption of the engine 56 over the planned route R. In other words, the power split of the vehicle 50 is optimized by enabling the control system 52 to postpone use of the motor 55, thus accumulating or sustaining as much battery capacity needed as possible in order to decrease fuel consumption, and possibly to drive in accordance with geofence constraints, as will be detailed hereinafter.

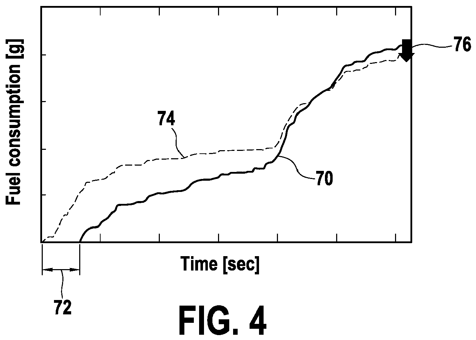

This optimized power split is illustrated in Fig. 4, which is a chart plotting the vehicle fuel consumption (i.e. fuel consumption by the engine 56) over time along a given route. Trace 70, shown as a solid line, illustrates the prior art behavior: at the beginning of the route, the motor 55 is used as much as possible, which results in no or little fuel consumption during a period 72. After that period 72, when the battery 54 has been depleted, the fuel consumption increases based on the engine 56 requirements to drive the vehicle 50 along the planned route R.

In contrast, trace 74, shown as a dashed line, illustrates a behavior according to an embodiment: since priority use of the engine 56 over depletion of the battery 54 is allowed, the fuel consumption may increase as from the beginning of the planned route R, as shown in Fig. 4. In a first portion of the chart, on the left-hand side in Fig. 4, this results in the fuel consumption for trace 74 being greater than the fuel consumption for trace 70. However, since the SOC is determined by distributing depletion of the battery 54 over the entire route, and not only at the beginning, energy from the battery 54 can be used to power the motor 55 during later portions of the planned route R, when it is more efficient to do so. As can be seen in Fig. 4, at the end of the route, on the right-hand side in Fig. 4, trace 74 is below trace 70. Thus, the embodiment yields fuel consumption savings 76 and enables to decrease the fuel consumption and GHG emissions over the route.

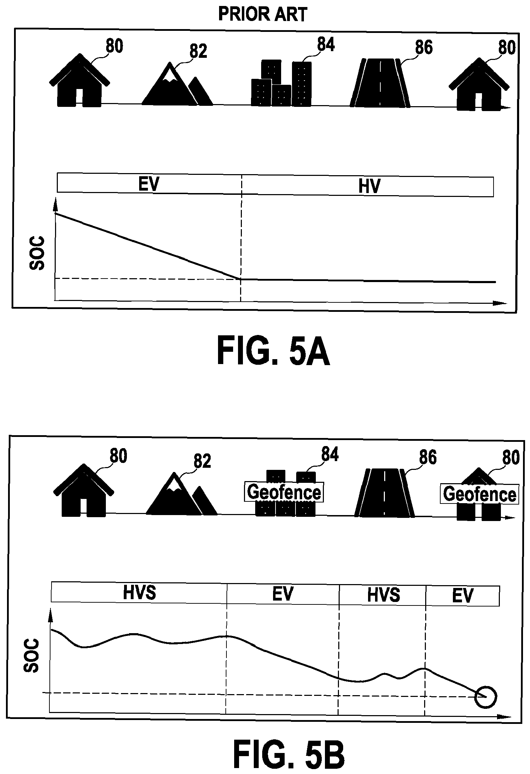

Figure 5A diagrammatically illustrates how the SOC varies with time when following the greedy approach of the prior art. Irrespective of the type of zone in which the vehicle 50 is driven (e.g. sparse urban areas 80, countryside areas 82, dense urban areas 84, highways 86), the motor 55 is used first as much as possible: the vehicle 50 is driven in electric mode EV (standing for Electric Vehicle). When the battery is depleted, i.e. when the SOC reaches a minimum value, the motor 55 can no longer be used and the vehicle 50 is driven mostly, if not only, with the engine 56, in hybrid mode HV (standing for Hybrid Vehicle).

In contrast, Fig. 5B diagrammatically illustrates how the SOC varies with time when following the SOC computed in the computing step 26. Figure 5B illustrates a further refinement in which use of the motor 55 is distributed over the planned route R while taking constraints into account. As constraints, the previously determined geofences may be taken into account.

Specifically, in the example of Fig. 5B, the geofence indicator indicates that the vehicle should drive in electric mode in the dense urban area 84 and in the last sparse urban area 80 (hereinafter collectively referred to as the electric-driving geofences). Elsewhere, no geofencing constrains the behavior of the vehicle 50. Therefore, the SOC is determined such that the only the motor 55 is used in the electric-driving geofences. To this end, the SOC may be sustained or increased in prior portions of the planned route R, in order to save enough electric power to ensure sole use of the motor 55 in the electric-driving geofences.

Thus, as shown in Fig. 5B, the vehicle 50 is driven in HVS mode (Hybrid Vehicle Sustaining mode, so called because this mode sustains the battery SOC around an SOC target) in the first sparse urban area 80 and in the subsequent countryside area 82. In these areas, the computed state of charge has at least one non-decreasing portion. Then, due to the geofence, the vehicle 50 is driven in EV mode in the dense urban area 84. Then, in the absence of geofence, the vehicle 50 is driven in HVS mode again on the highway 86. Finally, due to the geofence, the vehicle 50 is driven in EV mode in the last sparse urban area 80.

The SOC is determined so as to reach a target value at the end of the planned route, within a tolerance. Here, the target value corresponds to a minimum value of the battery 54, which is the same in Figs. 5A and 5B. For instance, the minimum value may be between 8% and 15% of the maximum SOC, preferably between 9% and 14%. However, if the full route can be travelled without the engine 56, i.e. only with the motor 55, or if battery SOC must be saved for other applications (e.g. a return travel), the target value may be greater than the minimum value.

As can be seen in comparing Figs. 5A and 5B, in the embodiment of Fig. 5B, the SOC is determined such as to reach a minimum value at a point of the planned route R further than a point where the SOC would reach the minimum value if the motor 55 were used continuously from the beginning of the planned route R. That is, in Fig. 5B, the SOC reaches a minimum at the end of the planned route, whereas in Fig. 5A, the SOC reaches a minimum much earlier, specifically about a transition from the countryside area 82 to the dense urban area 84.

Although this optimization has been presented with geofences as constraints, it may apply in a similar manner with other types of constraints, or with no constraints at all.

As regards the optimization of the SOC itself, many techniques can be used, as detailed above. The following describes a possible implementation of one of those techniques, namely Pontryagin Maximization Principle (PMP).

In this embodiment, given an initial state (or first boundary) of the system, implementation of PMP comprises three phases which are repeated until convergence: initializing (at first run) or updating (at subsequent runs) a co-state (first phase), simulating the state of charge over the planned route with optimal control (second phase), and checking a convergence condition for the state of charge at the end of the planned route (third phase). The second phase includes three stages for each time step $k$: determining at least one Hamiltonian at time step $k$ (first stage), finding a corresponding optimal control at time step $k$ (second stage), and propagating the state and co-state to subsequent time step $k + 1$ (third stage). Thus, at each planned time step $k$ along the planned route, an optimal control $u_k^*$ is found, the resulting new state of the vehicle $x_{k+1}^*$ is predicted and the new co-state $p_{k+1}^*$ of the vehicle at the following planned time step $k + 1$ is determined. For instance, the state $x$ to optimize, also noted $SOC$, is the state of charge of the battery 54, and the control variable $u$, noted $[Ne, Te]$, is a vector of operating points of the engine, namely engine speed $Ne$ and engine torque $Te$.

At the beginning, the initial state $SOC_0^*$ is assumed to be known. For instance, the initial state can be measured on the battery 54.

In the first phase, the initial co-state $p_0^*$ is initialized to an initial value. The co-state represents a measurement of the tendency for the power split system to use the battery energy over the engine energy. The higher the value of the initial co-state, the higher the cost of an increase of battery state SOC in the Hamiltonian $H$, which means that charging the battery is more penalized. Conversely, depleting the battery has negative cost. Thus, a low demanding power cycle starting with high SOC will have a higher initial co-state value compared to a high demanding power cycle starting with low SOC.

For instance, the initial co-state $p_0^*$ may be arbitrarily initialized, for example to a value between -3000 and 500, for example - 1200. Although the choice of the initial co-state may have an effect on the numerical stability of the method and hence convergence speed, this is addressed by a novel approach used to update the initial co-state at successive steps, based on the final cycle planned residual SOC value and some adaptive gains, which will be described later.

In the second phase, at every planned time step $k,$ at least one Hamiltonian is determined (first stage). In this embodiment, one Hamiltonian is determined per engine operation point. In an unusual manner, operation of the engine 56 is modelled by an OFF point and a plurality of $n$ ON points different from one another, for instance five ON points or more, or ten ON points or more, e.g. about 13 ON points. The number of ON points may be 20 or less, in order to ensure a balanced compromise between computation efficiency and accuracy.

As mentioned before, each operating point $u$ includes a given engine speed $Ne$ and a given engine torque $Te$. At the OFF point, $Te = Ne = 0$. For each ON point, $Te$ and $Ne$ are non-zero. The ON points may correspond to optimal operating points of the engine 56 for a plurality of engine speeds.

The Hamiltonian $H_k^i$ for each operating point $u_k^i$ may be determined as

$$H_k^i = \dot{m}_{f_k}^i\left(u_k^i\right) + p_k \dot{SOC}_k^i(u_k^i, Tp_k, v_k, SOC_k)$$ , where $u_k^i = \left(Ne_k^i, Te_k^i\right)$ is the $i$-th possible engine operating control point at time step $k$, $Nek$ is the $i$-th possible engine speed control point, $Te_k^i$ is the $i$-th possible engine torque control point, $\dot{m}_{f_k}^i$ is the mass fuel rate (e.g. in grams per second; represents the engine consumption) corresponding to the $i$-th possible engine operating control operating point $u_k^i$ , $p_k$ is the co-state at time step $k$, $\dot{SOC}_k^i$ is the derivative of the SOC at time step $k$ assuming the engine control operating point used is the $i$-th one, $T_{pk}$ is the planned demanded propeller shaft torque at time step $k$, $v_k$ is the planned vehicle speed at time step $k$, $SOC_k$ is the planned SOC at time step $k$. As can be seen, the Hamiltonian $H_k^i$ depends on the state $SOC_k$.

In the second stage of the second phase, the optimal engine operation point at time step k, noted $u_k^*$ , is determined as the operating point among the $u_k^i$ which makes the smallest Hamiltonian $H_k^*$ among the Hamiltonians $H_k^i$ . That is, $u_k^* = argmin \left(H_k^1, H_k^2, \dots, H_k^n\right)$ .

Basically, the optimal engine operation point at time step $k$ is the operation point which minimizes the cost function represented by the Hamiltonians $H_k^i$ .

Taking the propeller shaft torque $T_{pk}$ and the vehicle speed $v_k$ into account in the Hamiltonians enables to match the SOC computation with the parameters of the planned route. In this respect, a pre-processing may be done to convert parameters of the planned route, such as the vectors $[t_k, v_k, slope_k]$ at time steps $k$ on the complete planned route to vectors at time steps $k$ $[Tp_k, v_k]$, $t_k$ being the planned time at time step $k$ and $slope_k$ the planned slope at time step $k$. In this pre-processing, some parameters may be supposed to be known and constant, such as the equivalent mass of the vehicle (taking all vehicle parts inertias into account) and the road load coefficients. It is of course not necessarily the case in reality, where these parameters could deviate from nominal values. A possible solution to this deviation issue versus reality would be to detect or estimate the values of these parameters, e.g. by coupling the optimization with an online mass and road load observer.

The geofencing indicator, or other geofencing information, may be taken into account by bypassing the second phase, in other words forcing the engine control operating point determination to the desired value. For instance, in an electric-driving geofence, the engine control operating point $u$ may be forced to the OFF point. However, the geofencing indicator may be overridden to some extent to keep the vehicle within acceptable operating limits. For instance, the optimization of the control operating point u may be limited to a subset of the ON points making sure the state SOC would not exceed the SOC bound constraints $SOC_{min}$ and $SOC_{max}$. This is for example necessary in case the battery is not charged enough (too low SOC): in order to protect the battery, the engine will be forced to an ON point among the set of possible ON points, even when the geofencing indicator would normally constrain the system, for instance, to drive electrically. More generally, the space of admissible control actions should be limited to the subset of actions not violating any power or speed limit on any powertrain components, like engine speed/torque limits, battery limits, etc.

The model used to calculate the term $\dot{SOC}_k^i(u_k^i, x_k^i)$ , where $x_k^i$ is here a vector of powertrain system states, may depend on the powertrain system configuration or application of the vehicle: for instance, the model depends on whether the vehicle has a series hybrid architecture, a parallel hybrid architecture, a series-parallel hybrid architecture, an e-continuously variable transmission hybrid architecture, or whether the vehicle is a fuel cell electric vehicle, etc.

In the third stage, the state and the co-state are propagated. That it, the state and co-state at the following time step $k + 1$ are predicted.

Optionally, during this third stage of the second phase, at least one of the iteratively calculated state of charge and a co-state is saturated (capped), i.e. prevented from exceeding a lower and/or an upper boundary.

Thus, in this embodiment, the third stage of the second phase may be represented by the following equations:

$$SOC_{k+1}^* = sat_0^1\{SOC_k^* + \dot{SOC}_k^* \cdot dt\}$$

$$p_{k+1}^* = sat_{-3000}^{500} \left\{ p_k^* - \frac{dH_k^*}{dSOC} \cdot dt \right\}$$

where $H_k^*$ is the Hamiltonian for the previously determined optimal engine operation point $u_k^*$. As can be seen, the co-state varies from a time step $k$ to a subsequent time step $k + 1$. In these equations, it is assumed that the state $SOC_{k+1}^*$ varies between 0 (0%) and 1 (100%). Besides, it is assumed that the co-state $p_{k+1}^*$ varies between 500 and -3000, as detailed previously. These values empirically ensure that the co-state would not diverge to unrealistic numerical values. Optionally, the method may detect if the co-state saturates on one of these bounds, and may then stop the optimization and return an error of convergence issue. Optionally, the last solution found by the algorithm can be taken, for instance if a convergence criterion is not met after a predetermined time or number of iterations. This may happen if the target value cannot be physically reached, e.g. if the planned route is too short to deplete the battery.

The three stages of the second phase may be implemented for a sub-portion (multiple consecutive points) of the planned route R, and then repeated for subsequent sub-portions. More generally, the state of charge $SOC_k^*$ may be computed for successive sub-portions of the planned route. For instance, a sub-portion may comprise 120 samples of one second each. At the end of a sub-portion, only the final point may be kept in memory in order to initialize the computation for the subsequent sub-portion.

In the third phase, a convergence condition is checked on the computation results of the second phase. Optionally, the convergence condition may be defined as a constraint for the computed values. For instance, as mentioned above, the SOC is determined so as to reach a target value at the end of the planned route, within a tolerance *TOL*. The convergence condition may be expressed as follows:

$$DSOC_T < TOL, \text{ where } DSOC_T = \left| SOC_T^{Target} - SOC_T^* \right|$$

where $SOC_T^{Target}$ is the target value at final time step T and $SOC_T^*$ is the computed SOC at the end of the planned route R (i.e. at final time step T). For instance, with SOC lying between 0% and 100%, *TOL* may be 5% or less, preferably 2% or less, preferably 0.1% or less.

If the convergence condition is met by the predicted SOC trace *SOC\**, the optimization terminates and the *SOC\** values are stored, optionally with the engine operation points *u\**. If the convergence condition is not met, the optimization loops back to the first phase, in which the co-state $p_{0(NEW)}^*$ is no longer initialized but updated. As opposed to conventional PMP in which the initial co-state guess is updated using a numerical optimization iterative method (e.g. Newton method), in the present embodiment, optionally, to address numerical stability issues , the co-state may be updated (i.e. the new initial co-state may be determined) as follows:

$$p_{0(NEW)}^* = p_0^* + K_p \cdot DSOC_T$$ where $K_p$ is a gain. In a refinement, the gain $K_p$ may depend on the difference $DSOC_T$ between the target value of the state of charge $SOC_T^{Target}$ and the predicted value of the state of charge at the end of the planned route $SOC_T^*$. That is, not only is $K_p$ multiplied by $DSOC_T$ in the above equation, but $K_p$ itself takes different values depending on $DSOC_T$. For instance, the greater the difference $DSOC_T$, the greater the gain $K_p$. This adaptive gain achieves a much faster convergence and eliminates numerical stability issues inherent to PMP.

Next, the second and third phases are repeated, and if need be, the first, second and third phases are executed again until the convergence condition is met.

Thanks to this optimization, the power split strategy on the planned route R is proactively and predictively determined, in order to achieve lower fuel consumption and to comply with geofence constraints.

After computing the *SOC\**, the method proceeds to an outputting step 28 for outputting control instructions for the vehicle 50 to follow the computed *SOC\**, which is regarded as optimal, along the planned route R. The control instructions may comprise operating points of the engine 56 and/or switching ON/OFF of the motor 55, for instance, along the planned route R. For instance, the control instructions may comprise forcing the exclusive use of the motor 55 or the engine 56, as the case may be, when the actual SOC deviates from the computed SOC by more than a threshold. Thus, the vehicle 50 can follow the computed optimal SOC and can not only have decreased fuel consumption and GHG emissions, but also, if applicable, comply with the constraints associated to the geofences along the planned route R.

In view of the foregoing, a method 120 for generating control instructions for a hybrid vehicle is disclosed, comprising obtaining step 12 for obtaining a planned route R of the vehicle 50, computing step 26 for computing a $SOC^*$ of the battery 54 along the planned route R, wherein the $SOC^*$ is determined by distributing use of the motor 55 over the planned route R while allowing priority use of the engine 56 over depletion of the battery 54 to decrease fuel consumption of the engine 56 over the planned route R, and outputting step 28 for outputting control instructions for the vehicle 50 to follow the computed $SOC^*$ along the planned route R.

This generating method 120 may be carried out by the control system 52, which is, in this case, embedded in the vehicle 50. That is, the vehicle 50 comprises the necessary hardware and software onboard to optimize its power split. However, in other embodiments, the generating method 120 may be implemented outside the vehicle 50, and the control instructions only may be sent to the vehicle 50, e.g. to the control system 52.

Optionally, as shown in Fig. 1, the guiding method 100 comprises a checking step 30, checking whether the vehicle 50 deviates from the planned route R. If the vehicle 50 does not deviate from the planned route R (NO at step 30), the checking step 30 is repeated regularly. If the vehicle 50 deviates from the planned route R (YES at step 30), rerouting of the vehicle 50 may be triggered. The guiding method 100 proceeds again to step 12, where an updated planned route R is obtained, taking the deviation into account. The followings steps 14-30 may be carried out as described before.

Although the present disclosure refers to specific exemplary embodiments, modifications may be provided to these examples without departing from the general scope of the invention as defined by the claims. For instance, although the use of the motor and the engine has been presented as alternatives to each other, the motor and the engine may drive the drive train concurrently. In particular, although the vehicle is driven in electric mode, the engine may be used to provide additional driving power if the user's or vehicle request for power is too high to be met by the motor alone.

Besides, although implementation features have been detailed in the context of Pontryagin Maximization Principle, they may be transposed to other optimization techniques.

More generally, individual characteristics of the different illustrated/mentioned embodiments may be combined in additional embodiments. Therefore, the description and the drawings should be considered in an illustrative rather than in a restrictive sense.

**Claims**

1. A method (120) of generating control instructions for a hybrid vehicle (50) comprising a drive train (51), a battery (54), an electric motor (55) powered by the battery (54) and a fuel engine (56), wherein the electric motor (55) is configured to supply mechanical power to the drive train (51), and the fuel engine (56) is configured to supply mechanical power to the drive train (51) or to supply electrical power to the battery (54), the method comprising:

   - obtaining (12) a planned route (R) of the vehicle (50);
   - computing (26) a state of charge of the battery (54) along the planned route (R), wherein the state of charge is determined by distributing use of the electric motor (55) over the planned route (R) while allowing priority use of the fuel engine (56) over depletion of the battery (54) to decrease fuel consumption of the fuel engine (56) over the planned route;
   - outputting (28) control instructions for the vehicle (50) to follow the computed state of charge along the planned route (R).

2. The method of claim 1, wherein the state of charge is determined such as to reach a minimum value at a point of the planned route (R) further than a point where the state of charge would reach the minimum value if the electric motor (55) were used continuously from the beginning of the planned route (R).

3. The method of claim 1 or 2, wherein the computed state of charge has at least one non-decreasing portion before reaching a minimum value.

4. The method of any one of claims 1 to 3, wherein the state of charge is determined such that the state of charge has reached a target value at the end of the planned route (R), within a tolerance.

5. The method of any one of claims 1 to 4, wherein use of the electric motor (55) is distributed over the planned route (R) while taking constraints such as geofences (61, 63, 65, 67a), in particular electric-driving geofences, into account.

6. The method of any one of claims 1 to 5, wherein the state of charge is computed by an optimization technique such as Pontryagin Maximization Principle.

7. The method of claim 6, wherein, in implementing Pontryagin Maximization Principle, the operation of the fuel engine is modelled by an OFF point and a plurality of ON points.

8. The method of claim 6 or 7, wherein, in implementing Pontryagin Maximization Principle, at least one of the iteratively calculated state of charge and a co-state is saturated.

9. The method of any one of claims 6 to 8, wherein, in implementing Pontryagin Maximization Principle, a gain used to update an initial co-state of the fuel engine operation point depends on a difference between a target value of the state of charge and a predicted value of the state of charge at the end of the planned route.

10. The method of any one of claims 1 to 9, wherein the state of charge is successively computed for successive sub-portions of the planned route.

11. A device (52) for generating control instructions for a hybrid vehicle (50) comprising a drive train (51), a battery (54), an electric motor (55) powered by the battery (54) and a fuel engine (56), wherein the electric motor (55) and the fuel engine (56) are configured to supply mechanical power to the drive train (51), the device being configured to:

- obtain a planned route (R) of the vehicle (50);
- compute a state of charge of the battery (54) along the planned route (R), wherein the state of charge is determined by distributing use of the electric motor (55) over the planned route (R) while allowing priority use of the fuel engine (56) over depletion of the battery (54) to decrease fuel consumption of the fuel engine (56) over the planned route (R);
- output control instructions for the vehicle (50) to follow the computed state of charge along the planned route (R).

12. A vehicle (50) comprising the device (52) of claim 11, embedded in the vehicle (50).

13. A computer program including instructions for executing the steps of the method of any one of claims 1 to 10 when said program is executed by a computer.

14. A recording medium readable by a computer and having recorded thereon a computer program including instructions for executing the steps of the method of any one of claims 1 to 10.

**Amended claims in accordance with Rule 137(2) EPC.**

**1.** A method (120) of generating control instructions for a hybrid vehicle (50) comprising a drive train (51), a battery (54), an electric motor (55) powered by the battery (54) and a fuel engine (56), wherein the electric motor (55) is configured to supply mechanical power to the drive train (51), and the fuel engine (56) is configured to supply mechanical power to the drive train (51) or to supply electrical power to the battery (54), the method comprising:

- obtaining (12) a planned route (R) of the vehicle (50);
- predicting (16) a speed profile of the vehicle along the planned route (R), by using a meta-data when available, the speed profile being determined based on vehicle characteristics and speed regulations;
- computing (26) a state of charge of the battery (54) along the planned route (R), wherein the state of charge is determined by distributing use of the electric motor (55) over the planned route (R) while allowing priority use of the fuel engine (56) over depletion of the battery (54) to decrease fuel consumption of the fuel engine (56) over the planned route, the computed state of charge having at least one non-decreasing portion before reaching a minimum value, the non-decreasing portion being a constant portion when the fuel engine (56) is used instead of the electric motor (55), or an increasing portion when the battery (54) is charged;
- outputting (28) control instructions for the vehicle (50) to follow the computed state of charge along the planned route (R).

**2.** The method of claim 1, wherein the state of charge is determined such as to reach a minimum value at a point of the planned route (R) further than a point where the state of charge would reach the minimum value if the electric motor (55) were used continuously from the beginning of the planned route (R).

**3.** The method of claim 1 or 2, wherein the state of charge is determined such that the state of charge has reached a target value at the end of the planned route (R), within a tolerance.

**4.** The method of any one of claims 1 to 3, wherein use of the electric motor (55) is distributed over the planned route (R) while taking constraints such as geofences (61, 63, 65, 67a), in particular electric-driving geofences, into account.

**5.** The method of any one of claims 1 to 4, wherein the state of charge is computed by an optimization technique such as Pontryagin Maximization Principle.

**6.** The method of claim 5, wherein, in implementing Pontryagin Maximization Principle, the operation of the fuel engine is modelled by an OFF point and a plurality of ON points.

**7.** The method of claim 5 or 6, wherein, in implementing Pontryagin Maximization Principle, at least one of the iteratively calculated state of charge and a co-state is saturated.

**8.** The method of any one of claims 5 to 7, wherein, in implementing Pontryagin Maximization Principle, a gain used to update an initial co-state of the fuel engine operation point depends on a difference between a target value of the state of charge and a predicted value of the state of charge at the end of the planned route.

**9.** The method of any one of claims 1 to 8, wherein the state of charge is successively computed for successive sub-portions of the planned route.

**10.** A device (52) for generating control instructions for a hybrid vehicle (50) comprising a drive train (51), a battery (54), an electric motor (55) powered by the battery (54) and a fuel engine (56), wherein the electric motor (55) and the fuel engine (56) are configured to supply mechanical power to the drive train (51), the device being configured to:

- obtain a planned route (R) of the vehicle (50);
- predict a speed profile of the vehicle along the planned route (R), by using a meta-data when available, the speed profile being determined based on vehicle characteristics and speed regulations;
- compute a state of charge of the battery (54) along the planned route (R), wherein the state of charge is determined by distributing use of the electric motor (55) over the planned route (R) while allowing priority use of the fuel engine (56) over depletion of the battery (54) to decrease fuel consumption of the fuel engine (56) over the planned route (R), the computed state of charge having at least one non-decreasing portion before reaching a minimum value, the non-decreasing portion being a constant portion when the fuel engine (56) is used instead of the electric motor (55), or an increasing portion when the battery (54) is charged;
- output control instructions for the vehicle (50) to follow the computed state of charge along the planned route (R).

**11.** A vehicle (50) comprising the device (52) of claim 10, embedded in the vehicle (50).

**12.** A computer program including instructions for executing the steps of the method of any one of claims 1 to 9 when said program is executed by a computer.

**13.** A recording medium readable by a computer and having recorded thereon a computer program including instructions for executing the steps of the method of any one of claims 1 to 9.

**1.** A method (120) of generating control instructions for a hybrid vehicle (50) comprising a drive train (51), a battery (54), an electric motor (55) powered by the battery (54) and a fuel engine (56), wherein the electric motor (55) is configured to supply mechanical power to the drive train (51), and the fuel engine (56) is configured to supply mechanical power to the drive train (51) or to supply electrical power to the battery (54), the method comprising:

- obtaining (12) a planned route (R) of the vehicle (50);
- predicting (16) a speed profile of the vehicle along the planned route (R), by using a meta-data when available, the speed profile being determined based on vehicle characteristics and speed regulations;
- computing (26) a state of charge of the battery (54) along the planned route (R), wherein the state of charge is determined by distributing use of the electric motor (55) over the planned route (R) while allowing priority use of the fuel engine (56) over depletion of the battery (54) to decrease fuel consumption of the fuel engine (56) over the planned route, the computed state of charge having at least one non-decreasing portion before reaching a minimum value, the non-decreasing portion being a constant portion when the fuel engine (56) is used instead of the electric motor (55), or an increasing portion when the battery (54) is charged;
- outputting (28) control instructions for the vehicle (50) to follow the computed state of charge along the planned route (R),

wherein use of the electric motor (55) is distributed over the planned route (R) while taking constraints such as geofences (61, 63, 65, 67a), in particular electric-driving geofences, into account.

**2.** The method of claim 1, wherein the state of charge is determined such as to reach a minimum value at a point of the planned route (R) further than a point where the state of charge would reach the minimum value if the electric motor (55) were used continuously from the beginning of the planned route (R).

**3.** The method of claim 1 or 2, wherein the state of charge is determined such that the state of charge has reached a target value at the end of the planned route (R), within a tolerance.

**4.** The method of any one of claims 1 to 3, wherein the state of charge is computed by an optimization technique such as Pontryagin Maximization Principle.

**5.** The method of claim 4, wherein, in implementing Pontryagin Maximization Principle, the operation of the fuel engine is modelled by an OFF point and a plurality of ON points.

**6.** The method of claim 4 or 5, wherein, in implementing Pontryagin Maximization Principle, at least one of the iteratively calculated state of charge and a co-state is saturated.

**7.** The method of any one of claims 4 to 6, wherein, in implementing Pontryagin Maximization Principle, a gain used to update an initial co-state of the fuel engine operation point depends on a difference between a target value of the state of charge and a predicted value of the state of charge at the end of the planned route.

**8.** The method of any one of claims 1 to 7, wherein the state of charge is successively computed for successive sub-portions of the planned route.

**9.** A device (52) for generating control instructions for a hybrid vehicle (50) comprising a drive train (51), a battery (54), an electric motor (55) powered by the battery (54) and a fuel engine (56), wherein the electric motor (55) and the fuel engine (56) are configured to supply mechanical power to the drive train (51), the device being configured to:

- obtain a planned route (R) of the vehicle (50);
- predict a speed profile of the vehicle along the planned route (R), by using a meta-data when available, the speed profile being determined based on vehicle characteristics and speed regulations;
- compute a state of charge of the battery (54) along the planned route (R), wherein the state of charge is determined by distributing use of the electric motor (55) over the planned route (R) while allowing priority use of the fuel engine (56) over depletion of the battery (54) to decrease fuel consumption of the fuel engine (56) over the planned route (R), the computed state of charge having at least one non-decreasing portion before reaching a minimum value, the non-decreasing portion being a constant portion when the fuel engine (56) is used instead of the electric motor (55), or an increasing portion when the battery (54) is charged;
- output control instructions for the vehicle (50) to follow the computed state of charge along the planned route (R),

wherein use of the electric motor (55) is distributed over the planned route (R) while taking constraints such as geofences (61, 63, 65, 67a), in particular electric-driving geofences, into account.

**10.** A vehicle (50) comprising the device (52) of claim 9, embedded in the vehicle (50).

**11.** A computer program including instructions for executing the steps of the method of any one of claims 1 to 8 when said program is executed by a computer.

**12.** A recording medium readable by a computer and having recorded thereon a computer program including instructions for executing the steps of the method of any one of claims 1 to 8.

**1.** A method (120) of generating control instructions for a hybrid vehicle (50) comprising a drive train (51), a battery (54), an electric motor (55) powered by the battery (54) and a fuel engine (56), wherein the electric motor (55) is configured to supply mechanical power to the drive train (51), and the fuel engine (56) is configured to supply mechanical power to the drive train (51) or to supply electrical power to the battery (54), the method comprising:

- obtaining (12) a planned route (R) of the vehicle (50);
- predicting (16) a speed profile of the vehicle along the planned route (R), by using a meta-data when available, the speed profile being determined based on vehicle characteristics and speed regulations;
- computing (26) a state of charge of the battery (54) along the planned route (R), wherein the state of charge is determined by distributing use of the electric motor (55) over the planned route (R) while allowing priority use of the fuel engine (56) over depletion of the battery (54) to decrease fuel consumption of the fuel engine (56) over the planned route, the computed state of charge having at least one non-decreasing portion before reaching a minimum value, the non-decreasing portion being a constant portion when the fuel engine (56) is used instead of the electric motor (55), or an increasing portion when the battery (54) is charged;
- outputting (28) control instructions for the vehicle (50) to follow the computed state of charge along the planned route (R),

wherein the state of charge is computed by an optimization technique including Pontryagin Maximization Principle, and in implementing Pontryagin Maximization Principle, the operation of the fuel engine is modelled by an OFF point and a plurality of ON points.

2. The method of claim 1, wherein the state of charge is determined such as to reach a minimum value at a point of the planned route (R) further than a point where the state of charge would reach the minimum value if the electric motor (55) were used continuously from the beginning of the planned route (R).

3. The method of claim 1 or 2, wherein the state of charge is determined such that the state of charge has reached a target value at the end of the planned route (R), within a tolerance.

4. The method of any one of claims 1 to 3, wherein use of the electric motor (55) is distributed over the planned route (R) while taking constraints such as geofences (61, 63, 65, 67a), in particular electric-driving geofences, into account.

5. The method of any one of claims 1 to 4, wherein, in implementing Pontryagin Maximization Principle, at least one of the iteratively calculated state of charge and a co-state is saturated.

6. The method of any one of claims 1 to 5, wherein, in implementing Pontryagin Maximization Principle, a gain used to update an initial co-state of the fuel engine operation point depends on a difference between a target value of the state of charge and a predicted value of the state of charge at the end of the planned route.

7. The method of any one of claims 1 to 6, wherein the state of charge is successively computed for successive sub-portions of the planned route.

8. A device (52) for generating control instructions for a hybrid vehicle (50) comprising a drive train (51), a battery (54), an electric motor (55) powered by the battery (54) and a fuel engine (56), wherein the electric motor (55) and the fuel engine (56) are configured to supply mechanical power to the drive train (51), the device being configured to:

- obtain a planned route (R) of the vehicle (50);
- predict a speed profile of the vehicle along the planned route (R), by using a meta-data when available, the speed profile being determined based on vehicle characteristics and speed regulations;
- compute a state of charge of the battery (54) along the planned route (R), wherein the state of charge is determined by distributing use of the electric motor (55) over the planned route (R) while allowing priority use of the fuel engine (56) over depletion of the battery (54) to decrease fuel consumption of the fuel engine (56) over the planned route (R), the computed state of charge having at least one non-decreasing portion before reaching a minimum value, the non-decreasing portion being a constant portion when the fuel engine (56) is used instead of the electric motor (55), or an increasing portion when the battery (54) is charged;
- output control instructions for the vehicle (50) to follow the computed state of charge along the planned route (R),

wherein the state of charge is computed by an optimization technique including Pontryagin Maximization Principle, and in implementing Pontryagin Maximization Principle, the operation of the fuel engine is modelled by an OFF point and a plurality of ON points.

**9.** A vehicle (50) comprising the device (52) of claim 8, embedded in the vehicle (50).

**10.** A computer program including instructions for executing the steps of the method of any one of claims 1 to 7 when said program is executed by a computer.

**11.** A recording medium readable by a computer and having recorded thereon a computer program including instructions for executing the steps of the method of any one of claims 1 to 7.

**1.** A method (120) of generating control instructions for a hybrid vehicle (50) comprising a drive train (51), a battery (54), an electric motor (55) powered by the battery (54) and a fuel engine (56), wherein the electric motor (55) is configured to supply mechanical power to the drive train (51), and the fuel engine (56) is configured to supply mechanical power to the drive train (51) or to supply electrical power to the battery (54), the method comprising:

- obtaining (12) a planned route (R) of the vehicle (50);
- predicting (16) a speed profile of the vehicle along the planned route (R), by using a meta-data when available, the speed profile being determined based on vehicle characteristics and speed regulations;
- computing (26) a state of charge of the battery (54) along the planned route (R), wherein the state of charge is determined by distributing use of the electric motor (55) over the planned route (R) while allowing priority use of the fuel engine (56) over depletion of the battery (54) to decrease fuel consumption of the fuel engine (56) over the planned route, the computed state of charge having at least one non-decreasing portion before reaching a minimum value, the non-decreasing portion being a constant portion when the fuel engine (56) is used instead of the electric motor (55), or an increasing portion when the battery (54) is charged;
- outputting (28) control instructions for the vehicle (50) to follow the computed state of charge along the planned route (R),

wherein the state of charge is computed by an optimization technique including Pontryagin Maximization Principle and in implementing Pontryagin Maximization Principle, a gain used to update an initial co-state of the fuel engine operation point depends on a difference between a target value of the state of charge and a predicted value of the state of charge at the end of the planned route.

**2.** The method of claim 1, wherein the state of charge is determined such as to reach a minimum value at a point of the planned route (R) further than a point where the state of charge would reach the minimum value if the electric motor (55) were used continuously from the beginning of the planned route (R).

**3.** The method of claim 1 or 2, wherein the state of charge is determined such that the state of charge has reached a target value at the end of the planned route (R), within a tolerance.

**4.** The method of any one of claims 1 to 3, wherein use of the electric motor (55) is distributed over the planned route (R) while taking constraints such as geofences (61, 63, 65, 67a), in particular electric-driving geofences, into account.

**5.** The method of any one of claims 1 to 4, wherein, in implementing Pontryagin Maximization Principle, the operation of the fuel engine is modelled by an OFF point and a plurality of ON points.

**6.** The method of any one of claims 1 to 5, wherein, in implementing Pontryagin Maximization Principle, at least one of the iteratively calculated state of charge and a co-state is saturated.

**7.** The method of any one of claims 1 to 6, wherein the state of charge is successively computed for successive sub-portions of the planned route.

**8.** A device (52) for generating control instructions for a hybrid vehicle (50) comprising a drive train (51), a battery (54), an electric motor (55) powered by the battery (54) and a fuel engine (56), wherein the electric motor (55) and the fuel engine (56) are configured to supply mechanical power to the drive train (51), the device being configured to:

- obtain a planned route (R) of the vehicle (50);
- predict a speed profile of the vehicle along the planned route (R), by using a meta-data when available, the speed profile being determined based on vehicle characteristics and speed regulations;
- compute a state of charge of the battery (54) along the planned route (R), wherein the state of charge is determined by distributing use of the electric motor (55) over the planned route (R) while allowing priority use of the fuel engine (56) over depletion of the battery (54) to decrease fuel consumption of the fuel engine (56) over the planned route (R), the computed state of charge having at least one non-decreasing portion before reaching a minimum value, the non-decreasing portion being a constant portion when the fuel engine (56) is used instead of the electric motor (55), or an increasing portion when the battery (54) is charged;
- output control instructions for the vehicle (50) to follow the computed state of charge along the planned route (R),

wherein the state of charge is computed by an optimization technique including Pontryagin Maximization Principle and in implementing Pontryagin Maximization Principle, a gain used to update an initial co-state of the fuel engine operation point depends on a difference between a target value of the state of charge and a predicted value of the state of charge at the end of the planned route.

**9.** A vehicle (50) comprising the device (52) of claim 8, embedded in the vehicle (50).

**10.** A computer program including instructions for executing the steps of the method of any one of claims 1 to 7 when said program is executed by a computer.

**11.** A recording medium readable by a computer and having recorded thereon a computer program including instructions for executing the steps of the method of any one of claims 1 to 7.

FIG. 1

**FIG. 2**

**FIG. 3**

FIG. 4

PRIOR ART

## FIG. 5A

## FIG. 5B

Europäisches
Patentamt

European
Patent Office

Office européen
des brevets

# EUROPEAN SEARCH REPORT

**Application Number**

EP 22 30 6158

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 756 963 A1 (FPT MOTORENFORSCHUNG AG [CH]) 30 December 2020 (2020-12-30) * paragraphs [0011], [0012], [0130], [0058], [0059], [0104], [0105], [0122], [0131], [0179]; claim 1; figure 1 * ----- | 1-14 | INV. B60K6/20 B60W10/06 B60W10/08 B60W10/26 B60W20/11 B60W20/12 B60W20/14 |
| X | US 2020/391721 A1 (WANG YUE-YUN [US] ET AL) 17 December 2020 (2020-12-17) * paragraphs [0013], [0048] – [0051]; claims 1,2 * ----- | 1-14 | |

**TECHNICAL FIELDS SEARCHED (IPC)**

B60K
B60W

The present search report has been drawn up for all claims

| Place of search | Date of completion of the search | Examiner |
|---|---|---|
| Munich | 29 November 2022 | Vena, Gianpiero |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6158

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2022

| Patent document cited in search report | | Publication date | Patent family member(s) | Publication date |
|---|---|---|---|---|
| EP 3756963 | A1 | 30-12-2020 | NONE | |
| US 2020391721 | A1 | 17-12-2020 | NONE | |

EPO FORM P0459

For more details about this annex : see Official Journal of the European Patent Office, No. 12/82